# EUROPÄISCHE PATENTSCHRIFT

(11) **EP 3 728 737 B1**
(45) Veröffentlichungstag und Bekanntmachung des Hinweises auf die Patenterteilung: **17.08.2022**
(21) Anmeldenummer: 18811748.5
(22) Anmeldetag: 21.11.2018
(51) Int. Cl.: E01B 27/16, B06B 1/04, B06B 1/18, H01F 7/16, H02K 33/00, H02K 33/02, H02K 33/12

(54) **STOPFAGGREGAT ZUM UNTERSTOPFEN VON SCHWELLEN EINES GLEISES**
TAMPING ASSEMBLY FOR TAMPING SLEEPERS OF A TRACK
MACHINE DE BOURRAGE POUR BOURRER DES TRAVERSES D'UNE VOIE FERRÉE

(30) Priorität: 21.12.2017 AT 4922017
(43) Veröffentlichungstag der Anmeldung: 28.10.2020
(73) Patentinhaber: Plasser & Theurer Export von Bahnbaumaschinen GmbH, 1010 Wien (AT)
(72) Erfinder: STOFF, Silvio, 4111 Walding (AT); WOLLANEK, Samuel, 4230 Pregarten (AT)
(86) Internationale Anmeldenummer: PCT/EP2018/081997
(87) Internationale Veröffentlichungsnummer: WO 2019/120834

(56) Entgegenhaltungen:
- EP-A1- 1 130 164
- WO-A1-2017/011775
- AT-B- 350 097
- RU-C1- 2 597 258
- US-A- 3 621 786

## Beschreibung

### Gebiet der Technik

Die Erfindung betrifft ein Stopfaggregat zum Unterstopfen von Schwellen eines Gleises, umfassend eine Stopfeinheit mit einem absenkbaren Werkzeugträger und gegenüberliegenden Stopfwerkzeugen, wobei jedes Stopfwerkzeug über einen Schwenkarm mit einem Beistellantrieb zur Erzeugung einer Beistellbewegung verbunden und wobei ein einen elektromagnetischen Aktuator und ein Gehäuse umfassender Vibrationsantrieb zur Beaufschlagung der Stopfwerkzeuge mit einer Vibrationsbewegung vorgesehen ist.

### Stand der Technik

Für eine Instandhaltung eines Gleises oder nach einer Gleiserneuerung besteht gewöhnlich die Notwendigkeit, eine Schotterbettung zu verdichten. Neben Handstopfern kennt man zu diesem Zweck Stopfaggregate, die an Gleisbaumaschinen angeordnet sind. Während einer Gleisunterstopfung bewegt sich die Gleisbaumaschine entlang des Gleises, wobei am Stopfaggregat befestigte Stopfpickel in Schwellenfächer abgesenkt und beigestellt werden.

Stopfaggregate zum Unterstopfen von Schwellen eines Gleises sind bereits vielfach bekannt, wie z. B. durch WO 2017/011775 A1 oder AT 350 097 B. Als Vibrationserreger dient
eine rotierbare Exzenterwelle, an der die Beistellantriebe zur Übertragung der Schwingungen auf die Stopfpickel angelenkt sind. Bei dieser Bauart ist
die Schwingungsamplitude an den Stopfwerkzeugen fix vorgegeben. Zusammenfassung der Erfindung

Der Erfindung liegt die Aufgabe zugrunde, für ein Stopfaggregat der eingangs genannten Art eine Verbesserung gegenüber dem Stand der Technik anzugeben.

Erfindungsgemäß wird diese Aufgabe gelöst durch ein Stopfaggregat gemäß Anspruch 1. Abhängige Ansprüche geben vorteilhafte Ausgestaltungen der Erfindung an.

Die Erfindung sieht vor, dass der Vibrationsantrieb einen elektromagnetischen Aktuator umfasst. Der elektromagnetische Aktuator stellt eine sehr robuste und kostengünstige Lösung für eine Erzeugung einer Schwingung dar und kann mit geringem Aufwand auf die meisten bestehenden Stopfaggregate nachgerüstet werden. Außerdem bietet der elektromagnetische Aktuator eine besonders geräuscharme Lösung für den Vibrationsantrieb.

Gemäß der Erfindung umfasst der elektromagnetische Aktuator einen Anker, der mit einem Schaft verbunden ist, wobei der Schaft mittels einer Gleithülse durch eine Gehäuseöffnung geführt ist. Auf diese Weise führt eine mechanische Kopplung des mit dem Anker verbundenen Schafts mit dem Beistellantrieb zu einer erzwungenen Schwingungsübertragung auf die Stopfwerkzeuge. Die Gleithülse bietet eine verschleißarme Lagerung des Schafts und verhindert ein Eindringen von Staub und Schmutz in das Gehäuse des Vibrationsantriebs.

Des Weiteren ist es sinnvoll, dass der Vibrationsantrieb ein Gehäuse umfasst, in dem Kühlkanäle zum Kühlen mittels eines flüssigen Kühlmediums angeordnet sind. Durch das Kühlmedium in den Kühlkanälen wird eine im Betrieb entstehende Wärme zuverlässig abgeführt. Dies erhöht die Leistung und die Lebensdauer des Vibrationsantriebs.

Eine vorteilhafte Weiterbildung sieht vor, dass der Vibrationsantrieb mittels zerstörungsfrei lösbarer Verbindungen mit dem Werkzeugträger und mit den Beistellantrieben gekoppelt ist. Dadurch kann der Vibrationsantrieb bei Bedarf schnell und einfach vom Werkzeugträger getrennt werden, sollte es zu einem Defekt im Arbeitseinsatz kommen. Auch eine Anpassung an die örtlichen Gegebenheiten wäre denkbar, wenn z.B. eine größere bzw. kleinere Schwingungsamplitude benötigt wird, kann einfach der passende Vibrationsantrieb ausgewählt und an den Werkzeugträger adaptiert werden.

Zudem ist es günstig, wenn innerhalb eines bis auf Durchführungen geschlossenen Gehäuses lediglich ein Anker beweglich angeordnet ist, wobei der Anker mit zumindest einem Beistellantrieb gekoppelt ist. Ein derartiger Vibrationsantrieb ist einfach aufgebaut und ermöglicht unterschiedliche Kombinationen zur Schwingungsübertragung. Aufgrund der wenigen bewegten Teile innerhalb des geschlossenen Gehäuses arbeitet der Antrieb nahezu verschleißfrei.

Eine vorteilhafte Variante der Erfindung sieht vor, dass innerhalb des Gehäuses eine Feder angeordnet ist, die den Anker gegen einen Deckel des Gehäuses drückt. Auf den Anker wirkt dann nur in einer Richtung eine pulsierende elektromagnetische Kraft. Eine Rückstellkraft in die Gegenrichtung wird mittels der Feder aufgebracht.

Dabei ist vorzugsweise der Deckel innerhalb des Gehäuses in Schwingungsrichtung verstellbar angeordnet. Dadurch kann die Schwingungsamplitude des Ankers verändert und an die Anforderungen der jeweiligen Arbeitssituation angepasst werden. Beispielsweise erfolgt eine Amplitudenanpassung bei veränderter Schotterbettqualität.

Eine andere vorteilhafte Variante der Erfindung sieht vor, dass der Anker gegenüber zwei Magnetkörpern (Joche) und zwei Magnetspulen (Erregerwicklungen) beweglich angeordnet ist und dass der Anker insbesondere mit beiden Beistellantrieben gekoppelt ist. Eine Schwingungserzeugung erfolgt durch einen abwechselnde Bestromung der beiden Magnetspulen. Bei dieser Variante ist keine Rückstellfeder erforderlich. Ein besonders einfacher Aufbau der Gesamtanordnung ist gegeben, wenn beide Beistellantriebe über einen jeweiligen Schaft mit dem Anker gekoppelt sind.

Eine zusätzliche Variante der Vorrichtung sieht vor, dass innerhalb eines bis auf Durchführungen geschlossenen Gehäuses zwei Anker beweglich angeordnet sind und dass jeder Anker mit einem der beiden Beistellantriebe gekoppelt ist. Auf diese Weise ist jeder Beistellantrieb mit einer eigenen Schwingung beaufschlagbar. Beispielsweise führen gegengleiche Schwingungsbewegungen zu einer reduzierten Vibrationsbelastung des Werkzeugträgers. Zudem stellt die kompakte Bauform einen Vorteil dar, insbesondere bei der Nachrüstung von bestehenden Stopfaggregaten.

Bei einer Weiterbildung dieser Variante ist jedem Anker eine Feder zugeordnet, die den jeweiligen Anker gegen eine im Gehäuse angeordnete Trennwand drückt. Dadurch sind die beiden elektromagnetischen Aktuatoren besonders platzsparend in einem Gehäuse untergebracht.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Stopfeinheit eines Stopfaggregats
- Fig. 2: Aktuator mit einem Elektromagnet und Feder
- Fig. 3: Aktuator mit zwei Elektromagneten
- Fig. 4: Aktuator mit zwei Elektromagneten und zwei Federn

### Beschreibung der Ausführungsformen

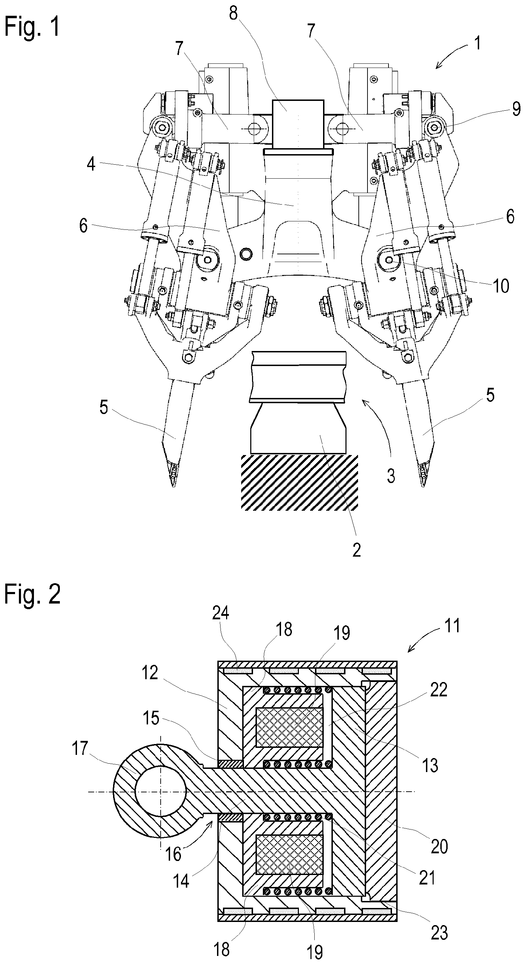

Fig.1 zeigt eine Stopfeinheit 1 eines Stopfaggregats zum Unterstopfen von Schwellen 2 eines Gleises 3 mit einem absenkbaren Werkzeugträger 4 und Paaren von zwei gegenüberliegenden Stopfwerkzeugen 5. In einem Stopfaggregat sind mehrere derartige Stopfeinheiten 1 unabhängig voneinander absenkbar und gegebenenfalls unabhängig voneinander querverschiebbar angeordnet. Ein solches Stopfaggregat ist für den Einbau in eine gleisverfahrbare Gleisstopfmaschine bzw. einen Stopfsatelliten vorgesehen. In einem Mehrschwellen-Stopfaggregat sind mehrere Stopfeinheiten in Gleislängsrichtung hintereinander angeordnet.

Das jeweilige Stopfwerkzeug 5 ist über einen Schwenkarm 6 und einen Beistellantrieb 7 mit einem Vibrationsantrieb 8 verbunden. Konkret bildet eine Verbindung des jeweiligen Schwenkarms 6 mit dem zugeordneten Beistellantrieb eine obere Schwenkachse 9. Um eine untere Schwenkachse 10 ist der jeweilige Schwenkarm 6 drehbar auf dem Werkzeugträger 4 gelagert. Der Vibrationsantrieb 8 ist mit zerstörungsfrei lösbaren Befestigungselementen, zum Beispiel mit Schraubenverbindungen am Werkzeugträger 4 befestigt und ebenso zerstörungsfrei lösbar mit den Beistellantrieben verbunden. Auf diese Weise ist ein einfacher Austausch des Vibrationsantriebs 8 durchführbar.

Fig. 2 zeigt eine vorteilhafte Variante eines elektromagnetischen Aktuators 11. Im Vibrationsantrieb 4 ist jedem Beistellantrieb 7 ein solcher Aktuator 11 zugeordnet. Der elektromagnetische Aktuator 11 umfasst ein zylinderförmiges Gehäuse 12. Innerhalb des Gehäuses 12 befindet sich ein Anker 13, der mit einem Schaft 14 verbunden ist. Der Schaft 14 ist mittels einer Gleithülse 15 durch eine Gehäuseöffnung 16 geführt. An einem durch die Gehäuseöffnung 16 durchgeführten Ende des Schafts 14 befindet sich eine ringförmige Kopplungsvorrichtung 17, an dem der zugeordnete Beistellantrieb 7 angelenkt ist.

Im Gehäuse ist ein Elektromagnet angeordnet, der einen Magnetkörper 18 (Joch) und eine Magnetspule 19 umfasst. Das Gehäuse 12 ist ankerseitig durch einen Deckel 20 verschlossen. Eine Feder 21 drückt bei stromloser Magnetspule 19 den Anker 13 gegen den Deckel 20, sodass zwischen Anker 13 und Magnetkörper 18 ein Luftspalt 22 entsteht. Der Deckel 20 ist über ein Außengewinde 23 gegenüber dem Gehäuse 12 verstellbar, sodass der Luftspalt 22 zwischen Magnetenkörper 18 und Anker 13 variiert werden kann. Auf diese Weise ist die auf die Stopfwerkzeuge 5 übertragene Schwingungsamplitude an bestehende Anforderungen anpassbar.

Ein durch die Magnetspule 19 fließender Strom baut ein Magnetfeld auf, der den Anker 13 in Richtung des Magnetkörpers 18 zieht und die Feder 21 spannt. Das Magnetfeld verkleinert dabei den Luftspalt 22, damit sich Feldlinien über einen geringen magnetischen Widerstand schließen können. Bei stromloser Magnetspule 19 wird das Magnetfeld abgebaut und die Feder 21 drückt den Anker 13 zurück in die Ausgangsposition. Ein pulsierender Strom führt zu der gewünschten Vibration des Ankers 13, wobei die Pulsabstände die Vibrationsfrequenz bestimmen. Durch die Vorgabe des Stromverlaufs mittels einer einstellbaren Steuerungseinrichtung ist die Frequenz auf einfache Weise an die Anforderungen eines Stopfzyklus anpassbar. So kann die Frequenz für einen Eindringvorgang in ein Schotterbett erhöht und im angehobenen Zustand der Stopfeinheit 1 auf null abgesenkt werden.

Bei der Umwandlung der elektrischen Energie in mechanische Energie entsteht Wärme, die vorteilhafterweise durch ein Kühlmedium abgeleitet wird. Dazu sind im Gehäuse 12 Kühlkanäle 24 angeordnet, in dem das Kühlmedium zirkuliert. Gegenüber einer Luftkühlung besteht der Vorteil, dass eine im Umfeld des Stopfaggregats zwangsläufig auftretende Staubentwicklung keine Auswirkungen auf die Kühlfunktion hat.

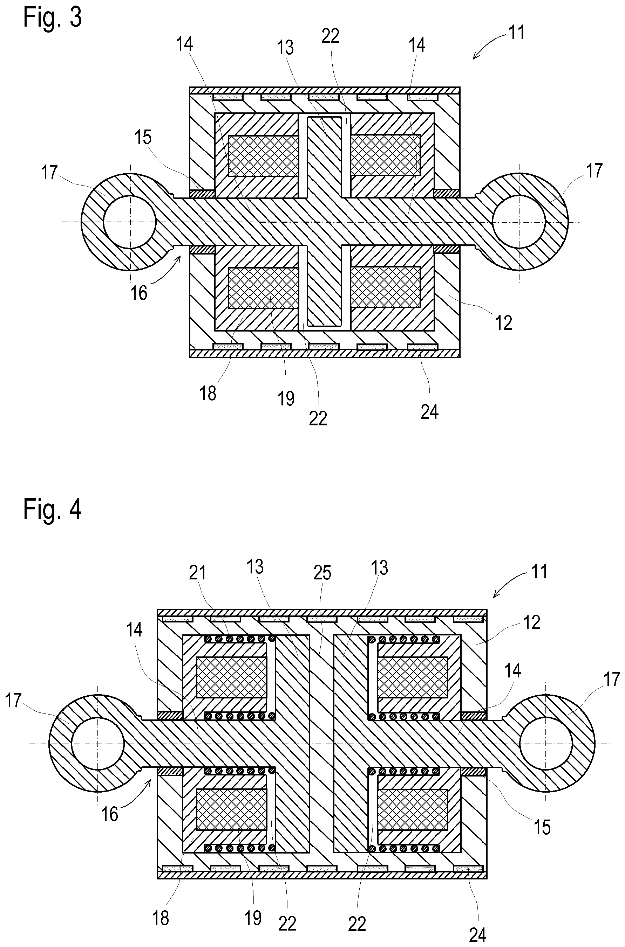

Fig. 3 zeigt ein weiteres Ausführungsbeispiel des elektromagnetischen Aktuators 11. Hier ist innerhalb des Gehäuses 12 ein mittig positionierter Anker 13 angeordnet, an dem beidseitig ein jeweiliger Schaft 14 befestigt ist. Jeder Schaft 14 ist mittels einer Gleithülse 15 durch das Gehäuse 12 geführt und über eine Kopplungsvorrichtung 17 an einen Beistellantrieb 7 angelenkt. Der Anker 13 ist zwischen zwei Elektromagneten angeordnet, die jeweils einen Magnetkörper 18 und eine Magnetspule 19 umfassen. Im stromlosen Zustand befindet sich der Anker 13 in der Mitte zwischen den Elektromagneten, sodass beidseits des Ankers 13 ein gleich großer Luftspalt 22 vorliegt. Durch abwechselndes Bestromen der Magnetspulen 19 wird der Anker 13 mit den Schäften 14 hin und her bewegt. Diese Schwingung wird über die beiden Beistellantriebe 7 und die Schwenkarme 6 auf die Stopfwerkzeuge 5 übertragen. Bei dieser Variante sind geringere Stromstärken und schwächer Magnetfelder ausreichend, weil keine Rückstellfedern gespannt werden müssen.

In Fig. 4 sind zwei Aktuatoren 11 mit dem Wirkprinzip gemäß Fig. 2 in einem gemeinsamen Gehäuse 12 angeordnet. Die Anker 13 der beiden Aktuatoren 11 sind dabei mittels einer jeweiligen Feder 21 gegen eine gemeinsame Trennwand 25 gedrückt. Hier wird auf die Einstellbarkeit der Schwingungsamplitude verzichtet, um eine kompakte Bauweise zu ermöglichen. Diese Variante eignet sich insbesondere für das Nachrüsten bestehender Stopfeinheiten, wobei jedes Stopfwerkzeug 5 mit einer eigenen Vibrationsbewegung beaufschlagbar ist.

Die geometrische Ausbildung der einzelnen Elemente kann an jeweilige Anforderungen angepasst werden. Beispielsweise kann das Gehäuse 12 quaderförmig ausgebildet sein. Auch die Gestaltung der Anker 13 und Elektromagneten ist an die Gegebenheiten einer jeweiligen Stopfeinheit 1 anpassbar. Vorgaben sind dabei die aufzubringenden Schwingungskräfte und Schwingungsamplituden sowie ein verfügbarer Einbauraum. Zudem können mehrere Elektromagneten um den jeweiligen Schaft 14 angeordnet werden.

In einer besonders einfachen Ausführung umfasst der Vibrationsantrieb 8 keinen Schaft 14. Dabei wird lediglich einen Anker 13 innerhalb eines geschlossenen Gehäuses 12 hin und her bewegt. Die Trägheitskräfte der Masse des Ankers 13 wirken nach außen und werden auf die Stopfwerkzeuge 5 übertragen.

Zudem besteht die Möglichkeit, an jedem Stopfwerkzeug 5 bzw. an jedem Schwenkarm 6 einen eigenen Vibrationsantrieb 8 anzuordnen. Dann entfällt die Übertragung über den jeweiligen Beistellzylinder 7. Beispielsweise wird die jeweils untere Schwenkachse 10 mit einer Vibrationsbewegung beaufschlagt oder der jeweilige Vibrationsantrieb 8 ist im Bereich einer Stopfwerkzeugaufnahme angeordnet. Dann erfolgt eine direkte Beaufschlagung des jeweiligen Stopfwerkzeugs 5 mit einer entsprechenden Vibrationsbewegung.

## Patentansprüche

1. Stopfaggregat zum Unterstopfen von Schwellen (2) eines Gleises (3), umfassend eine Stopfeinheit (1) mit einem absenkbaren Werkzeugträger (4) und gegenüberliegenden Stopfwerkzeugen (5), wobei jedes Stopfwerkzeug (5) über einen Schwenkarm (6) mit einem Beistellantrieb (7) zur Erzeugung einer Beistellbewegung verbunden und wobei ein einen elektromagnetischen Aktuator (11) und ein Gehäuse (12) umfassender Vibrationsantrieb (8) zur Beaufschlagung der Stopfwerkzeuge (5) mit einer Vibrationsbewegung vorgesehen ist, **dadurch gekennzeichnet, dass** der elektromagnetische Aktuator (11) einen Anker (13) umfasst, der mit einem Schaft (14) verbunden ist, und dass der Schaft (14) mittels einer Gleithülse (15) durch eine Gehäuseöffnung (16) des Gehäuses (12) geführt ist.

2. Stopfaggregat nach Anspruch 1, **dadurch gekennzeichnet, dass** im Gehäuse (12) Kühlkanäle (24) zum Kühlen mittels eines flüssigen Kühlmediums angeordnet sind.

3. Stopfaggregat nach Anspruch 1 oder 2, **dadurch gekennzeichnet, dass** der Vibrationsantrieb (8) mittels zerstörungsfrei lösbarer Verbindungen mit dem Werkzeugträger (4) und mit den Beistellantrieben (7) gekoppelt ist.

4. Stopfaggregat nach einem der Ansprüche 1 bis 3, **dadurch gekennzeichnet, dass** innerhalb des bis auf Durchführungen geschlossenen Gehäuses (12) lediglich ein Anker (13) beweglich angeordnet ist und dass der Anker (13) mit zumindest einem Beistellantrieb (7) gekoppelt ist.

5. Stopfaggregat nach Anspruch 4, **dadurch gekennzeichnet, dass** innerhalb des Gehäuses (12) eine Feder (21) angeordnet ist, die den Anker (13) gegen einen Deckel (20) des Gehäuses (12) drückt.

6. Stopfaggregat nach Anspruch 5, **dadurch gekennzeichnet, dass** der Deckel (20) innerhalb des Gehäuses (12) in Schwingungsrichtung verstellbar angeordnet ist.

7. Stopfaggregat nach Anspruch 4, **dadurch gekennzeichnet, dass** der Anker (13) gegenüber zwei Magnetkörpern (18) und zwei Magnetspulen (19) beweglich angeordnet ist und dass der Anker (13) insbesondere mit beiden Beistellantrieben (7) gekoppelt ist.

8. Stopfaggregat nach einem der Ansprüche 1 bis 3, **dadurch gekennzeichnet, dass** innerhalb eines bis auf Durchführungen geschlossenen Gehäuses (12) zwei Anker (13) beweglich angeordnet sind und dass jeder Anker (13) mit einem der beiden Beistellantriebe (7) gekoppelt ist.

9. Stopfaggregat nach Anspruch 8, **dadurch gekennzeichnet, dass** jedem Anker (13) eine Feder (21) zugeordnet ist, die den jeweiligen Anker (13) gegen eine im Gehäuse (12) angeordnete Trennwand (25) drückt.

## Claims

1. A tamping assembly for tamping sleepers (2) of a track (3), comprising a tamping unit (1) having a lowerable tool carrier (4) and oppositely positioned tamping tools (5), wherein each tamping tool (5) is connected via a pivot arm (6) to a squeezing drive (7) for generating a squeezing motion, and wherein a vibration drive (8) comprising an electromagnetic actuator (11) and a casing (12) is provided for actuation of the tamping tools (5) with a vibratory motion, **characterized in that** the electromagnetic actuator (11) comprises an anchor (13) which is connected to a shaft (14), and that the shaft (14) is guided through a casing orifice (16) of the casing (12) by means of a slide sleeve (15).

2. A tamping assembly according to claim 1, **characterized in that** cooling channels (24) are arranged in the casing (12) for cooling by means of a liquid cooling medium.

3. A tamping assembly according to claim 1 or 2, **characterized in that** the vibration drive (8) is coupled to the tool carrier (4) and to the squeezing drives (7) by means of non-destructively detachable connections.

4. A tamping assembly according to one of claims 1 to 3, **characterized in that** inside the casing (12), which is closed apart from passages, only one anchor (13) is movably arranged, and that the anchor (13) is coupled to at least one squeezing drive (7).

5. A tamping assembly according to claim 4, **characterized in that** a spring (21) which presses the anchor (13) against a cover (20) of the casing (12) is arranged inside the casing (12).

6. A tamping assembly according to claim 5, **characterized in that** the cover (20) is arranged within the casing (12) for adjustment in the oscillation direction.

7. A tamping assembly according to claim 4, **characterized in that** the anchor (13) is arranged for movement relative to two magnetic bodies (18) and two solenoids (19), and that the anchor (13) is coupled in particular to both squeezing drives (7).

8. A tamping assembly according to one of claims 1 to 3, **characterized in that** two anchors (13) are movably arranged inside a casing (12) which is closed apart from passages, and that each anchor (13) is coupled to one of the two squeezing drives (7).

9. A tamping assembly according to claim 8, **characterized in that** associated with each anchor (13) is a spring (21) which presses the respective anchor (13) against a partition (25) arranged in the casing (12).

## Revendications

1. Module de bourrage pour le bourrage inférieur de traverses (2) d'une voie ferrée (3), comprenant une unité de bourrage (1) avec un porte-outil pouvant être abaissé (4) et des outils de bourrage opposés (5), dans lequel chaque outil de bourrage (5) est connecté par le biais d'un bras pivotant (6) à un entraînement d'adjonction (7) pour la génération d'un mouvement d'adjonction et dans lequel un entraînement vibratoire (8) comprenant un actionneur électromagnétique (11) et un logement (12) est prévu pour la sollicitation des outils de bourrage (5) avec un mouvement vibratoire, **caractérisé en ce que** l'actionneur électromagnétique (11) comprend une ancre (13) qui est connectée à un arbre (14), et que l'arbre (14) est guidé au moyen d'un manchon coulissant (15) à travers une ouverture de logement (16) du logement (12).

2. Module de bourrage selon la revendication 1, **caractérisé en ce que** des canaux de refroidissement (24) sont disposés dans le logement (12) pour le refroidissement au moyen d'un milieu de refroidissement liquide.

3. Module de bourrage selon la revendication 1 ou 2, **caractérisé en ce que** l'entraînement vibratoire (8) est couplé au porte-outil (4) et aux entraînements d'adjonction (7) au moyen de connexions amovibles sans destruction.

4. Module de bourrage selon une des revendications 1 à 3, **caractérisé en ce que** seule une ancre (13) est disposée de manière mobile au sein du logement fermé (12) à l'exception de passages et que l'ancre (13) est couplée à au moins un entraînement d'adjonction (7).

5. Module de bourrage selon la revendication 4, **caractérisé en ce qu'**un ressort (21) qui pousse l'ancre (13) contre un couvercle (20) du logement (12) est disposé au sein du logement (12).

6. Module de bourrage selon la revendication 5, **caractérisé en ce que** le couvercle (20) est disposé au sein du logement (12) de manière à pouvoir être déplacé dans la direction d'oscillation.

7. Module de bourrage selon la revendication 4, **caractérisé en ce que** l'ancre (13) est disposée de manière mobile en face de deux corps aimantés (18) et deux bobines aimantées (19), et que l'ancre (13) est notamment couplée aux deux entraînements d'adjonction (7).

8. Module de bourrage selon une des revendications 1 à 3, **caractérisé en ce que** deux ancres (13) sont disposées de manière mobile au sein d'un logement fermé (12) à l'exception de passages et que chaque ancre (13) est couplée à un des deux entraînements d'adjonction (7).

9. Module de bourrage selon la revendication 8, **caractérisé en ce qu'**un ressort (21) qui pousse l'ancre respective (13) contre une paroi de séparation (25) disposée dans le logement (12) est associé à chaque ancre (13).
